# DEMANDE DE BREVET EUROPEEN

(11) **EP 4 542 369 A1**
(43) Date de publication de la demande: **23.04.2025**
(21) Numéro de dépôt: 24206357.6
(22) Date de dépôt: 14.10.2024
(51) Int. Cl.: G06F 3/14, G06Q 50/06, G09G 5/00

(54) **ECRAN SANS FIL**

(30) Priorité: 20.10.2023 FR 2311401
(71) Demandeur: SAGEMCOM ENERGY & TELECOM SAS, 92270 Bois-Colombes (FR)
(72) Inventeur: TEBOULLE, Henri, 92270 BOIS-COLOMBES (FR); GINESTET, Patrick, 92270 BOIS-COLOMBES (FR)
(74) Mandataire: Cabinet Boettcher

(57) **Abrégé**

Dispositif d'affichage (1), agencé pour être intégré dans un équipement (2) qui comprend de plus un boîtier et un circuit principal (16), le dispositif d'affichage comportant :
- un écran (23), agencé pour être positionné sur le boîtier ;
- un circuit imprimé (22), sur lequel est monté l'écran et sur lequel sont montés :
o une première interface de communication (33), agencée pour recevoir des données montantes émises par le circuit principal via une communication sans fil ;
o un composant d'affichage (30), agencé pour faire afficher les données montantes par l'écran ;
o un circuit d'alimentation (31).

## Description

L'invention concerne le domaine des équipements munis d'un écran et, notamment mais pas uniquement, des compteurs électriques et des compteurs d'eau.

### ARRIERE PLAN DE L'INVENTION

La plupart des compteurs électriques récents comprennent un écran LCD (pour *Liquid Crystal Display,* ou écran à cristaux liquides) positionné sur la face avant du boîtier. Sur certains de ces compteurs, des boutons-poussoirs « + » et « - » permettent de faire défiler les informations affichées, et même parfois de communiquer avec la carte mère du compteur, par exemple pour commander la fermeture d'un organe de coupure intégré dans le compteur.

L'intégration de l'écran LCD dans le compteur soulève un certain nombre de problématiques.

L'écran LCD peut être monté sur un circuit imprimé, qui est alors connecté à la carte mère du compteur.

Le circuit imprimé de l'écran LCD peut être soudé sur la carte mère, ce qui pose les problèmes suivants.

Lors d'une opération de maintenance sur l'écran LCD, il peut être nécessaire de dessouder de la carte mère le circuit imprimé de l'écran LCD, ce qui représente une opération relativement complexe.

On évite d'ailleurs généralement de positionner des composants sur la carte mère en regard de la totalité de la surface du circuit imprimé de l'écran LCD, car l'accès à ces composants, qui pourrait être rendu nécessaire pour une opération de maintenance, nécessiterait de dessouder le circuit imprimé de l'écran LCD. On perd donc une surface importante d'implantation de composants sur la carte mère.

Le circuit imprimé de l'écran LCD peut aussi être connecté à la carte mère via des barrettes rigides métalliques de type HE14.

Le circuit imprimé de l'écran LCD, ou bien l'écran LCD lui-même, peut aussi être connecté à la carte mère via des câbles en nappe.

Ces solutions complexifient l'assemblage du compteur en usine, et présentent un encombrement relativement important (à la fois sur la carte mère et entre la carte mère et le circuit imprimé de l'écran LCD). Ces solutions sont aussi relativement coûteuses.

### OBJET DE L'INVENTION

L'invention a pour objet de simplifier l'assemblage d'un équipement intégrant un écran, de faciliter les opérations de maintenance, de réduire le coût de l'équipement, et de limiter l'encombrement et l'impact de la présence de l'écran sur l'implantation de composants dans l'équipement.

### RESUME DE L'INVENTION

En vue de la réalisation de ce but, on propose un dispositif d'affichage, agencé pour être intégré dans un équipement qui comprend de plus un boîtier et un circuit principal intégré dans le boîtier, le dispositif d'affichage comportant :
- un écran, agencé pour être positionné sur le boîtier ;
- un circuit imprimé, sur lequel est monté l'écran et sur lequel sont montés :
   o une première interface de communication, agencée pour recevoir des données montantes émises par le circuit principal via une communication sans fil ;
   o un composant d'affichage, agencé pour faire afficher les données montantes par l'écran ;
   o un circuit d'alimentation, agencé pour alimenter le dispositif d'affichage.

Le dispositif d'affichage forme donc un bloc tout intégré, qui communique via une communication sans fil avec le circuit principal de l'équipement dans lequel il est installé.

Cette solution est extrêmement avantageuse, car il n'est plus nécessaire de prévoir de liaison nécessitant un contact (fils, connecteurs, câbles en nappe, etc.) entre l'écran et le circuit principal pour transmettre à l'écran les données à afficher, ce qui résout les difficultés évoquées plus tôt. Avantageusement, le circuit d'alimentation du dispositif d'affichage comprend une source d'alimentation (une pile par exemple), ou bien reçoit une alimentation via un canal sans fil, ce qui permet de supprimer toute liaison nécessitant un contact entre le dispositif d'affichage et le circuit principal.

On propose de plus un dispositif d'affichage tel que précédemment décrit, dans lequel la première interface de communication est aussi agencée pour transmettre des données descendantes au circuit principal via la communication sans fil, le dispositif d'affichage comprenant de plus une deuxième interface de communication agencée pour produire les données descendantes à partir d'une interaction avec une entité externe à l'équipement et pour transmettre lesdites données descendantes à la première interface de communication.

On propose de plus un dispositif d'affichage tel que précédemment décrit, dans lequel la communication sans fil est une communication optique.

On propose de plus un dispositif d'affichage tel que précédemment décrit, dans lequel la communication sans fil est une communication radiofréquence.

On propose de plus un dispositif d'affichage tel que précédemment décrit, dans lequel le circuit principal peut comporter un enroulement primaire et le circuit d'alimentation comporte un enroulement secondaire, le circuit principal pouvant générer un courant d'alimentation qui induit un courant induit dans l'enroulement secondaire, ledit courant induit étant utilisé pour alimenter le dispositif d'affichage.

On propose de plus un dispositif d'affichage tel que précédemment décrit, dans lequel la communication sans fil est aussi mise en oeuvre via l'enroulement primaire et l'enroulement secondaire.

On propose de plus un dispositif d'affichage tel que précédemment décrit, dans lequel le circuit d'alimentation comporte une pile.

On propose de plus un dispositif d'affichage tel que précédemment décrit, dans lequel le circuit d'alimentation comporte un connecteur de type HE14.

On propose de plus un capot de boîtier d'un équipement, comprenant un dispositif d'affichage tel que précédemment décrit.

On propose de plus un équipement comportant un boîtier, un circuit principal, et un dispositif d'affichage tel que précédemment décrit.

On propose de plus un équipement tel que précédemment décrit, dans lequel le boîtier comporte un capot auquel est fixé par emboîtement élastique le circuit imprimé du dispositif d'affichage.

On propose de plus un équipement tel que précédemment décrit, l'équipement étant un compteur électrique ou un compteur d'eau.

L'invention sera mieux comprise à la lumière de la description qui suit de modes de mise en oeuvre particuliers non limitatifs de l'invention.

### BREVE DESCRIPTION DES DESSINS

Il sera fait référence aux dessins annexés parmi lesquels :
[Fig. 1] la figure 1 représente une vue en coupe simplifiée de l'embase, du capot, de la carte mère et du dispositif d'affichage du compteur électrique, selon un plan perpendiculaire à la face avant du compteur ;
[Fig. 2] la figure 2 représente schématiquement le dispositif d'affichage et la carte mère selon un premier mode de réalisation ;
[Fig. 3] la figure 3 représente schématiquement le dispositif d'affichage et la carte mère selon un deuxième mode de réalisation ;
[Fig. 4] la figure 4 représente schématiquement le dispositif d'affichage et la carte mère selon un troisième mode de réalisation ;
[Fig. 5] la figure 5 représente schématiquement le dispositif d'affichage et la carte mère selon un quatrième mode de réalisation.

### DESCRIPTION DETAILLEE DE L'INVENTION

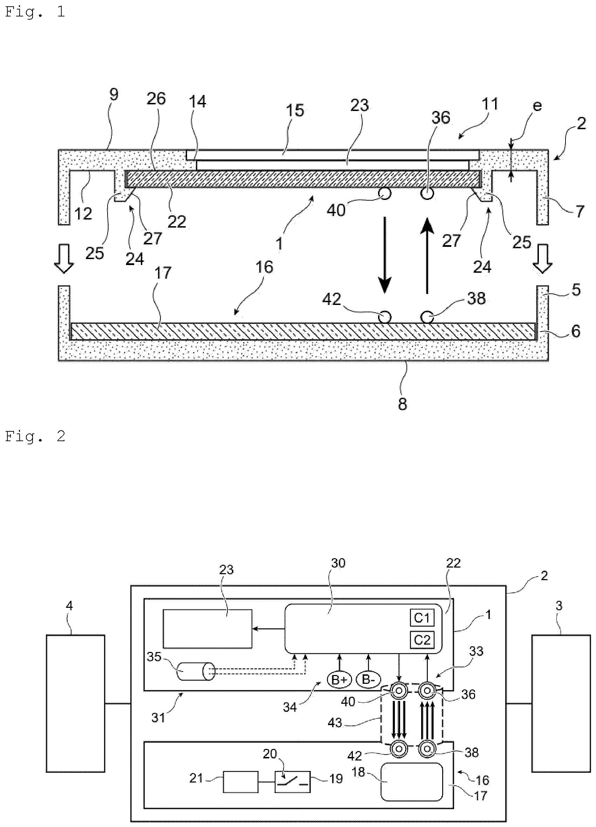

En référence aux figures 1 et 2, le dispositif d'affichage 1 selon un premier mode de réalisation est ici intégré dans un compteur électrique 2 qui est utilisé pour mesurer l'énergie électrique consommée par une installation 3 et fournie par un réseau de distribution 4. Le réseau de distribution peut être un réseau monophasé ou polyphasé.

Le compteur électrique 2 comporte un boîtier 5 (fabriqué en plastique par exemple) comprenant une portion de boîtier principale, appelée embase 6, et un capot 7. L'embase 6 comprend une face arrière 8 du boîtier 5, destinée à être appliquée contre un mur et fixée au mur. Le capot 7 comprend une face externe 9, qui est aussi la face avant du boîtier 5, qui est visible et accessible par l'abonné ou par un opérateur.

Ici, par « interne », on entend du côté de l'intérieur du compteur 2 lorsque celui-ci est assemblé, et par « externe », on entend du côté de l'extérieur.

Le capot 7, qui est fixé à l'embase 6 lorsque le boîtier 5 est assemblé, est amovible et peut être retiré et éloigné de l'embase 6 par un opérateur pour ouvrir le boîtier 5.

Le capot 7 comprend une ouverture rectangulaire 11 formée dans son épaisseur e, qui a des dimensions plus importantes au niveau de la face externe 9 du capot 7 qu'au niveau de sa face interne 12. Cet agrandissement de l'ouverture 11 forme un épaulement définissant une surface 14 sur laquelle est positionnée une plaque transparente 15 (fabriquée par exemple en verre ou en plastique transparent) qui s'étend donc sur une portion de la face avant 9 du boîtier 5.

Le compteur 2 comporte un circuit principal, qui est ici une carte électrique 16 dite « carte mère ». La carte mère 16 comprend un circuit imprimé 17 qui est positionné à proximité et parallèlement à la face interne de l'embase 6.

Un certain nombre de composants sont montés sur le circuit imprimé 17 de la carte mère 16, parmi lesquels un microcontrôleur 18 appelé ici « microcontrôleur métrologie » qui, notamment, acquiert les mesures réalisées par les différents capteurs du compteur 2 et réalise certains traitements sur lesdites mesures.

Le compteur 2 intègre de plus un organe de coupure 19. L'organe de coupure 19 est destiné à couper sélectivement le courant fourni à l'installation 3. L'organe de coupure 19 comprend un interrupteur 20 pour chaque phase du réseau de distribution 4.

L'organe de coupure 19 est piloté par un microcontrôleur 21 appelé « microcontrôleur applicatif », qui est monté sur la carte mère 16.

Le dispositif d'affichage 1 comporte quant à lui un circuit imprimé 22, distinct de celui de la carte mère 16, et un écran, en l'occurrence un écran LCD 23 qui est monté (ici soudé) sur la face externe du circuit imprimé 22.

Le dispositif d'affichage 1 est intégré de la manière suivante dans le compteur 2. Les bords du circuit imprimé 22 sont fixés par emboîtage élastique au capot 7. Le capot 7 comporte ainsi des pattes 24 qui s'étendent depuis la face interne 12 du capot 7 perpendiculairement à celle-ci, et qui sont munies chacune à son extrémité libre d'un crochet 25. Une surface d'accueil 26 est définie sur la face interne 12 du capot 7. La surface d'accueil 26 s'étend autour de l'ouverture 11. Les pattes 24 s'étendent de part et d'autre de la surface d'accueil 26. Les crochets 25 comprennent chacun une surface 27 inclinée vers la face interne 12 du capot 7 et située du côté de la surface d'accueil 26.

Lors du montage du dispositif d'affichage 1, les bords du circuit imprimé 22 appuient et glissent contre les surfaces 27 des crochets 25, qui s'écartent légèrement pour laisser passer le circuit imprimé 22, qui vient se positionner parallèlement à la face interne 12 et contre la surface d'accueil 26. L'écran LCD 23 est alors positionné dans l'ouverture formée dans l'épaisseur e du capot 7, de sorte que sa surface externe est entièrement recouverte par la plaque transparente 15.

Lorsque le compteur 2 est assemblé, le circuit imprimé 22 est positionné parallèlement au circuit imprimé 17 de la carte mère 16, à une distance typiquement comprise entre 1 cm et 6 cm de celui-ci.

Le dispositif d'affichage 1 comporte de plus un composant d'affichage, en l'occurrence un microcontrôleur 30 appelé ici « microcontrôleur LCD », un circuit d'alimentation 31, une première interface de communication 33 et une deuxième interface de communication 34. Tous ces composants sont montés sur le circuit imprimé 22.

Le microcontrôleur LCD 30 pilote entièrement l'écran LCD 23, en l'activant et le désactivant, en l'alimentant, et en lui fournissant les données à afficher au format adéquat.

Le circuit d'alimentation 31 comporte une pile 35, positionnée dans un logement fixé sur la face interne du circuit imprimé 22. Le circuit d'alimentation 31, et donc la pile 35, alimente la totalité du dispositif d'affichage 1. Comme l'écran LCD 23 est éteint la plupart du temps, il n'y a pas de contrainte critique concernant la durée de vie de la pile 35.

Le circuit d'alimentation 31 comporte aussi deux capacités C1, C2, montées sur le microcontrôleur LCD 30 (sur 2 pins différentes du microcontrôleur 30), qui permettent de fournir un complément d'alimentation ponctuel pour assurer la fourniture de courant lors de pics de tirage de courant par l'écran LCD 23. Chacune des capacités C1 et C2 est par exemple formée par un condensateur ayant une valeur de capacité de 1 µF, en parallèle avec un condensateur ayant une valeur de capacité de 68pF.

La première interface de communication 33 est agencée pour recevoir des données montantes émises par la carte mère 16 via une communication sans fil. La communication sans fil est ici une communication optique.

La première interface de communication 33 comprend un récepteur de signaux lumineux, ici en l'occurrence une photodiode infrarouge 36.

La carte mère 16 comprend quant à elle un émetteur de signaux lumineux, ici en l'occurrence une LED (diode électroluminescente) infrarouge 38.

La photodiode 36 et la LED 38 sont positionnées en regard l'une de l'autre.

La première interface de communication 33 du dispositif d'affichage 1 comprend de plus un émetteur de signaux lumineux, ici en l'occurrence une LED infrarouge 40.

La carte mère 16 comprend quant à elle un récepteur de signaux lumineux, ici en l'occurrence une photodiode infrarouge 42.

La LED 40 et la photodiode 42 sont positionnées en regard l'une de l'autre.

La première interface de communication 33 est donc aussi agencée pour transmettre des données descendantes à la carte mère 16.

Le compteur 1 comprend de plus un guide optique 43, monté entre le circuit imprimé 22 du dispositif d'affichage 1 et le circuit imprimé 17 de la carte mère 16, de manière à entourer les LEDs 38, 40, les photodiodes 36, 42, et donc le canal de communication optique sur toute sa longueur.

Le guide optique 43 a une forme cylindrique et permet de guider et de concentrer les signaux lumineux entre les LEDs 38, 40 et les photodiodes 36, 42.

La deuxième interface de communication 34 est agencée pour produire des données descendantes à partir d'une interaction avec une entité externe au compteur 2, et pour transmettre lesdites données descendantes à la première interface de communication 33 (qui elle-même les transmet à la carte mère 16). L'entité externe est ici un individu (abonné ou opérateur a priori).

La deuxième interface de communication 34 comprend ici deux boutons-poussoirs : un bouton « + » (B+) et un bouton « - » (B-), qui sont montés sur le circuit imprimé 22, qui sont positionnés à proximité de l'écran LCD 23, et qui peuvent être actionnés depuis l'extérieur du compteur 2.

L'abonné ou l'opérateur, en appuyant sur ces boutons, peut faire défiler les informations affichées sur l'écran LCD 23. L'abonné ou l'opérateur peut aussi, en réalisant un appui long sur le bouton B+, commander la fermeture de l'organe de coupure 19.

La deuxième interface de communication 34 transforme donc ces commandes en données descendantes qui sont alors transmises à la carte mère 16 via la première interface de communication 33, pour que la carte mère 16 effectue les actions requises. Ces actions requises consistent en l'occurrence à faire afficher par l'écran LCD 23 les informations demandées en les transmettant au dispositif d'affichage 1 via la première interface de communication 33, ou à commander la fermeture de l'organe de coupure 19.

La communication sans fil est donc une communication bidirectionnelle de type *full-duplex* qui utilise une couche physique infrarouge (LED et photodiode dans chaque sens de communication). La communication met en oeuvre une liaison série. Le protocole utilisé est par exemple le HDLC (pour *High-Level Data Link Control*), basé sur des trames HDLC en asynchrone (avec par exemple un débit de 9600 bits/s et des caractères asynchrones 8 bits sans parité) . La suite de caractères à transmettre est passée dans la *payload* (que l'on traduit parfois par charge utile, ou données utiles) de la trame HDLC montante (de la carte mère 16 vers le dispositif d'affichage 1) octet par octet en ASCII. Dans le sens descendant, pour refermer l'organe de coupure 19, on envoie par exemple une trame HDLC comportant l'octet de *payload* 0x01.

Le dispositif d'affichage 1 est donc un bloc unique, tout intégré, autonome en énergie, qui peut être monté et assemblé préalablement à l'assemblage du compteur 2 et qui peut avoir sa propre référence (*Part Number*). Il peut aussi être intégré avec le capot 7 pour former un bloc unique ayant sa propre référence.

Ainsi, lors de l'assemblage du compteur 2, il suffit de fixer le dispositif d'affichage 1 au capot 7 (s'ils ne sont pas déjà intégrés en un unique bloc), ici par emboîtage élastique, puis de fixer le capot 7 à l'embase 6 du boîtier 5. Aucune connexion électrique ne doit être réalisée entre le dispositif d'affichage 1 et le reste du compteur 2 lors de l'assemblage, ce qui facilite grandement le montage et réduit nettement le coût du compteur 2. Il est de plus possible de monter des composants sur la surface du circuit imprimé 17 de la carte mère 16, qui est située dans la projection de la surface du circuit imprimé 22 du dispositif d'affichage 1, car ladite surface est accessible directement lorsque le capot 7 est retiré du boîtier 2.

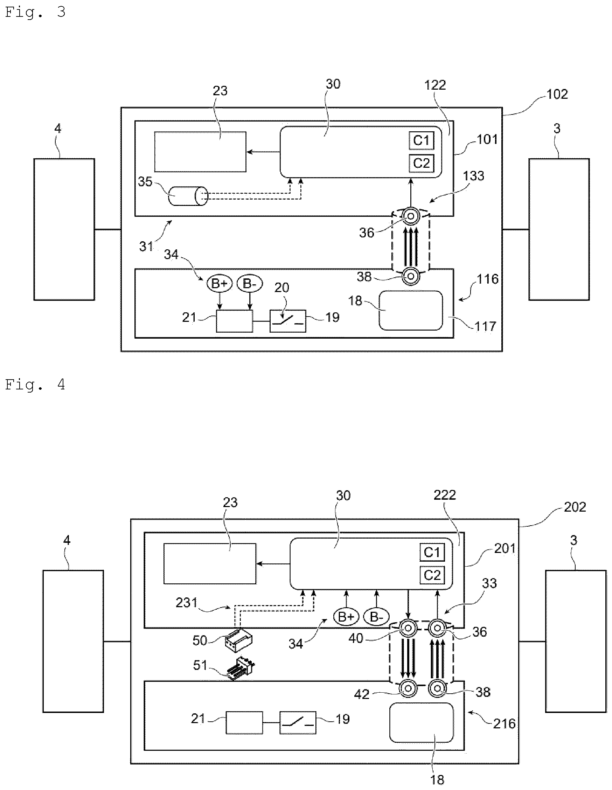

En référence à la figure 3, dans un deuxième mode de réalisation, le dispositif d'affichage 101 du compteur 102 ne comprend plus la deuxième interface de communication 34, et donc plus de boutons-poussoirs B+, B-. La deuxième interface de communication 34, et donc les boutons-poussoirs B+, B- ne sont plus positionnés sur le circuit imprimé 122 du dispositif d'affichage 101, mais sur le circuit imprimé 117 de la carte mère 116. Ici, les boutons-poussoirs B+, B-sont connectés au microcontrôleur applicatif 21.

La communication descendante n'est donc plus requise (communication unidirectionnelle suffisante), de sorte que la première interface de communication 133 du dispositif d'affichage 101 ne comporte plus la LED 40, et la carte mère 116 ne comporte plus la photodiode 42.

En référence à la figure 4, dans un troisième mode de réalisation, le dispositif d'affichage 201 du compteur 202 ne comporte plus de pile 35.

Cette fois, le circuit d'alimentation 231 comprend un connecteur 50, ici de type HE14 femelle, monté sur le circuit imprimé 222 du dispositif d'affichage 201.

La carte mère 216 comporte un connecteur complémentaire 51, donc HE14 mâle, positionné en regard du connecteur 50.

Ainsi, lors de l'assemblage du compteur 202, le dispositif d'affichage 201 est positionné de sorte que le connecteur 50 vient se connecter au connecteur 51. Le dispositif d'affichage 201 est donc alimenté par la carte mère 216 via les connecteurs 50, 51.

Ce mode de réalisation est avantageux par rapport à l'art antérieur, car les connecteurs 50, 51 ne comportent chacun que deux contacts : Vcc (3,3 V par exemple) et 0 V. Les connecteurs 50, 51 prennent donc très peu de place sur les circuits imprimés et notamment sur celui de la carte mère 216.

Il y a donc bien une liaison par contact entre le dispositif d'affichage 201 et la carte mère 216, mais cette liaison est peu encombrante, peu coûteuse, simple à manipuler, et ne nécessite pas d'opération de dessoudage pour éloigner le dispositif d'affichage 201 (et le capot 7) de la carte mère 216.

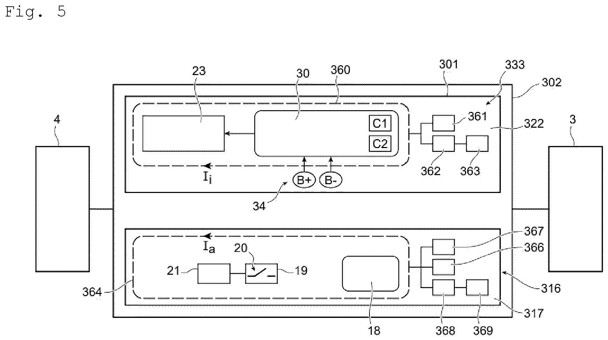

En référence à la figure 5, dans un quatrième mode de réalisation, le dispositif d'affichage 301 du compteur 302 ne comporte pas de pile 35 ni de connecteur 50.

Cette fois, la communication sans fil entre le dispositif d'affichage 301 et la carte mère 316 est une communication radiofréquence.

La première interface de communication 333 du dispositif d'affichage 301 comporte un enroulement secondaire 360, formé ici par des pistes imprimées sur la face interne du circuit imprimé 322. La première interface de communication 333 comporte aussi un ou des condensateurs 361 connectés à l'enroulement secondaire 360, ainsi qu'un transistor 362 relié à une charge 363.

De même la carte mère 316 comporte un enroulement primaire 364, formé ici par des pistes imprimées s'étendant sur la face interne du circuit imprimé 317, et qui, avantageusement, a les mêmes dimensions et est disposé coaxialement à l'enroulement secondaire 360. La carte mère 316 comporte aussi un ou des condensateurs 366 connectés à l'enroulement primaire 364, un amplificateur 367, ainsi qu'un transistor 368 relié à une charge 369.

Les valeurs d'inductance des enroulements 360, 364 et les valeurs de capacité des condensateurs 361, 366 sont définies de sorte que, lorsque le compteur 302 est assemblé et que les enroulements 360, 364 sont positionnés l'un en face de l'autre, les enroulements 360, 364 et les condensateurs 361, 366 forment un circuit résonant à une fréquence prédéfinie (par exemple 13,56 MHz).

La communication sans fil et l'alimentation du dispositif d'affichage 301 sont réalisées via l'enroulement primaire 364 et l'enroulement secondaire 360.

L'amplificateur 367 produit un courant d'alimentation Ia qui circule dans l'enroulement primaire 364, et qui génère un champ magnétique qui induit un courant induit Ii dans l'enroulement secondaire 360. Le courant induit Ii alimente le dispositif d'affichage 301.

La communication montante se fait via le transistor 368 qui connecte ou déconnecte la charge 369 de l'enroulement primaire 364 pour produire des états hauts et bas des données montantes. Cela module le champ magnétique, et donc le courant induit Ii. Cette modulation est captée par un circuit de démodulation de la première interface de communication 333 (non représenté) qui récupère alors les données montantes. De même, la communication descendante se fait via le transistor 362 qui connecte ou déconnecte la charge 363 de l'enroulement secondaire 360 et donc module le champ magnétique, ce qui module le courant d'alimentation Ia. Cette modulation est captée par un circuit de démodulation de la carte mère 316 (non représenté) qui récupère alors les données descendantes. La communication est cette fois une communication *half-duplex.*

Bien entendu, l'invention n'est pas limitée aux modes de réalisation décrits mais englobe toute variante entrant dans le champ de l'invention tel que défini par les revendications.

L'écran n'est pas nécessairement un écran LCD, il peut s'agir de tout type d'écran (LED, OLED, etc.).

Le dispositif d'affichage pourrait être fixé de manière différente au capot, et par exemple par vissage.

Les différents modes de réalisation peuvent être combinés. En particulier, on pourrait avoir :
- une pile dans le dispositif d'affichage, associée à tout autre moyen d'alimentation (via les connecteurs, sans fil) ;
- une communication sans fil et une alimentation sans fil utilisant des techniques différentes (par exemple optique pour la communication et radiofréquence pour l'alimentation) ;
- une communication montante et une communication descendante dans la première interface de communication, même sans deuxième interface de communication (le microcontrôleur LCD pourrait par exemple transmettre des données de monitoring à la carte mère) ;
- etc.

La communication optique n'utilise pas forcément des signaux infrarouges. Les composants utilisés peuvent être différents (par exemple des phototransistors au lieu des photodiodes).

La communication radiofréquence peut être réalisée à une ou des fréquences différentes de celle citée ici. Les enroulements peuvent être formés non pas par des pistes imprimées sur les circuits imprimés du dispositif d'affichage et de la carte mère, mais par des bobines de fil de cuivre, des antennes patchs, etc. La communication radiofréquence n'utilise pas nécessairement une modulation d'amplitude.

L'entité externe, avec laquelle communique la deuxième interface de communication du dispositif d'affichage, n'est pas nécessairement un individu. Il pourrait s'agit d'un équipement externe, un concentrateur de données ou un *smartphone* par exemple, la deuxième interface de communication comprenant alors dans ce cas des moyens de communications adaptés (radiofréquences par exemple).

Le circuit principal n'est pas forcément une carte mère d'un compteur (ou autre), il peut s'agir de tout dispositif électrique agencé pour transmettre des données à afficher à un écran.

L'équipement intégrant le dispositif d'affichage n'est pas nécessairement un compteur mais peut être tout type d'équipement.

## Revendications

1. Dispositif d'affichage (1 ; 101 ; 201 ; 301), agencé pour être intégré dans un équipement (2 ; 102 ; 202 ; 302) qui comprend de plus un boîtier (5) et un circuit principal (16 ; 116 ; 216 ; 316) intégré dans le boîtier, le dispositif d'affichage comportant :
- un écran (23), agencé pour être positionné sur le boîtier ;
- un circuit imprimé (22), sur lequel est monté l'écran et sur lequel sont montés :
o une première interface de communication (33 ; 133), agencée pour recevoir des données montantes émises par le circuit principal via une communication sans fil ;
o un composant d'affichage (30), agencé pour faire afficher les données montantes par l'écran ;
o un circuit d'alimentation (31), agencé pour alimenter le dispositif d'affichage.

2. Dispositif d'affichage selon la revendication 1, dans lequel la première interface de communication (33) est aussi agencée pour transmettre des données descendantes au circuit principal (16) via la communication sans fil, le dispositif d'affichage comprenant de plus une deuxième interface de communication (34) agencée pour produire les données descendantes à partir d'une interaction avec une entité externe à l'équipement et pour transmettre lesdites données descendantes à la première interface de communication (33).

3. Dispositif d'affichage selon l'une des revendications précédentes, dans lequel la communication sans fil est une communication optique.

4. Dispositif d'affichage selon l'une des revendications 1 ou 2, dans lequel la communication sans fil est une communication radiofréquence.

5. Dispositif d'affichage selon l'une des revendications précédentes, dans lequel le circuit principal (316) peut comporter un enroulement primaire (364) et le circuit d'alimentation comporte un enroulement secondaire (360), le circuit principal pouvant générer un courant d'alimentation (Ia) qui induit un courant induit (Ii) dans l'enroulement secondaire, ledit courant induit étant utilisé pour alimenter le dispositif d'affichage.

6. Dispositif d'affichage selon les revendications 4 et 5, dans lequel la communication sans fil est aussi mise en oeuvre via l'enroulement primaire (364) et l'enroulement secondaire (360) .

7. Dispositif d'affichage selon l'une des revendications précédentes, dans lequel le circuit d'alimentation (31) comporte une pile (35).

8. Dispositif d'affichage selon l'une des revendications précédentes, dans lequel le circuit d'alimentation (231) comporte un connecteur de type HE14 (50).

9. Capot (7) de boîtier (5) d'un équipement (2), comprenant un dispositif d'affichage selon l'une des revendications précédentes.

10. Equipement (2 ; 102 ; 202 ; 302) comportant un boîtier, un circuit principal, et un dispositif d'affichage selon l'une des revendications 1 à 8.

11. Equipement selon la revendication 10, dans lequel le boîtier comporte un capot auquel est fixé par emboîtement élastique le circuit imprimé (22) du dispositif d'affichage (1) .

12. Equipement selon l'une des revendications 10 ou 11, l'équipement étant un compteur électrique ou un compteur d'eau.
